# EUROPÄISCHE PATENTANMELDUNG

(11) **EP 0 949 323 A2**
(43) Veröffentlichungstag der Anmeldung: **13.10.1999**
(21) Anmeldenummer: 99106397.5
(22) Anmeldetag: 27.03.1999
(51) Int. Cl.: C10M 175/04, C02F 1/461

(54) **Verfahren und Vorrichtung zur Verlängerung der Gebrauchsfähigkeit eines Kühlschmierstoffes**

(30) Priorität: 28.03.1998 DE 19814004
(71) Anmelder: Mall-Neutra GmbH, 78315 Radolfzell (DE)
(72) Erfinder: Jörger, Frank, 78166 Donaueschingen (DE)
(74) Vertreter: Patentanwälte Westphal, Mussgnug & Partner

(57) **Zusammenfassung**

Es wird ein Verfahren und eine Vorrichtung zur Verlängerung der Gebrauchsfähigkeit eines wassergemischten Kühlschmierstoffs für Bearbeitungsmaschinen (1) beschrieben. Die gebrauchte Kühlschmierstoff-Emulsion wird durch eine Elektrolyseeinrichtung (8) mit großflächigen inerten Elektroden (6, 7) gepumpt, in welcher durch den elektrolytisch erzeugten atomaren Sauerstoff eine Oxidation der in der Kühlschmierstoff-Emulsion enthaltenen Keime stattfindet. Weiter wird die Kühlschmierstoff-Emulsion in der Elektrolyseeinrichtung (8) mit elektrolytisch erzeugten feinen Gasbläschen beladen. Die mit den Gasbläschen beladene Kühlschmierstoff-Emulsion wird einem Phasentrenner (9) zugeführt, in welchem mittels der Gasbläschen Fremdöle und Schmutzpartikel durch Flotation abgetrennt werden. Danach kann die so gereinigte Kühlschmierstoff-Emulsion für ihre weitere Verwendung einer Bearbeitungsmaschine wieder zugeführt werden.

## Beschreibung

Die Erfindung betrifft ein Verfahren und eine Vorrichtung zur Verlängerung der Gebrauchsfähigkeit eines Kühlschmierstoffs für Bearbeitungsmaschinen.

Bei der maschinellen Bearbeitung, insbesondere der spanenden Bearbeitung von Metallen, Glas, Keramik usw. werden Kühlschmierstoffe (nachfolgende KSS abgekürzt) in umfangreichem Maße eingesetzt. Die KSS dienen insbesondere zur Kühlung von Werkzeug und Werkstück, zur Schmierung und damit Herabsetzung der Reibungswärme sowie der Verschleiß- und Schnittkräfte und zur Reinigung des zu bearbeitenden Werkstücks bzw. des Werkzeugs durch Wegspülen der Späne und Verunreinigungen. Überwiegend werden wassermischbare KSS verwendet, die in Wasser emulgiert oder gelöst werden. Der KSS erfüllt dabei im wesentlichen die Funktion des Schmierens, während das Wasser primär für die Kühlung verantwortlich ist. Typische Mischungsverhältnisse für handelsübliche KSS-Emulsionen liegen bei einem Anteil von 2 bis 12 % KSS-Konzentrat und einem entsprechenden Restanteil von 88 bis 98 % Wasser.

Beim Einsatz der KSS werden diese zunehmend mit Fremdstoffen belastet. Solche Fremdstoffe sind Fremdöle, wie z.B. Leckageöl der Maschine und Korrosionsschutzmittel der Werkstücke, sowie Verschmutzungen, die insbesondere von der spanabhebenden Bearbeitung herrühren. Weiter kann der KSS durch eigene Inhaltsstoffe belastet werden, die durch Zersetzungsprozesse entstehen. Schließlich kann der KSS auch durch Mikroorganismen, wie Bakterien, Hefen und Pilze befallen werden, die zu einer biologischen Zersetzung und einer dadurch bedingten Geruchsbildung führen können. Dadurch, daß sich der KSS während seiner Verweildauer in der Bearbeitungsmaschine erwärmt, wird er zur idealen Brutstätte für anaerobe Mikroorganismen, die sich unter den für KSS üblichen Betriebsbedingungen in großem Umfang vermehren. Bei Sauerstoffmangel kommt es dann letztlich zum sogenannten Umkippen des KSS, womit ein Zustand beschrieben wird, in dem der KSS seine Gebrauchsfähigkeit verliert. Der KSS ist dann entweder aufgrund gesetzlicher und arbeitshygienischer Vorschriften, die die Verwendung des KSS nur bis zu einer bestimmten Keimzahl gestatten, zu ersetzen oder er kann schon allein deshalb nicht mehr weiter verwendet werden, weil er derart unangenehm riechende Faulgase freisetzt, daß die Weiterverwendung dem Bedienpersonal der Bearbeitungsmaschine einfach nicht mehr zuzumuten ist, zumal ein mit stark überhöhter Keimzahl kontaminierter KSS bei Hautkontakt sogar zu Hautausschlägen und anderen Gesundheitsgefährdungen führen kann.

Um die Standzeit des KSS von derzeit üblicherweise zwischen 2 und 6 Monaten zu verlängern, werden daher Maßnahmen gesucht, die der Beseitigung all der vorgenannten Fremdstoffe dienen, insbesondere auch der Keime und Bakterien. Zur Beseitigung der Fremdöle und festen Fremdstoffe sind beispielsweise aus dem Werk "Schmierstoffe im Betrieb" von Uwe J. Möller und Udo Boor, erschienen 1988 bei der VDI-Verlag GmbH, Seiten 482 bis 483, einige Maßnahmen bekannt, die nachstehend kurz erläutert werden.

Bei der Schwerkraftabscheidung wird die gebrauchte KSS-Emulsion frei fließend oder mittels Pumpe in einen Abscheidebehälter geleitet, in welchem die Strömung zunächst beruhigt wird, so daß Fremdöle aufgrund ihrer geringeren Dichte aufschwimmen können und Schlammanteile sedimentieren. Zur Erhöhung der Abscheideleistung werden häufig Koaleszenzabscheider, z.B. Schrägplatten-Koaleszenzabscheider eingesetzt. Solche Schwerkraftabscheider, die ausschließlich die natürliche Schwerkraftabscheidung ausnützen, haben einen großen Platzbedarf. Das Problem der biologischen Zersetzung und des biologischen Umkippens der KSS-Bäder wird hierbei aber nicht in Angriff genommen.

Weiter sind an den KSS-Behältern der Bearbeitungsmaschinen häufig Skimmersysteme zur Fremdölentfernung angebracht. Die Skimm-Einrichtung nimmt aufschwimmendes Fremdöl auf und entfernt dieses durch eine Abstreifeinrichtung. Bei kleineren Behältern werden Scheibenskimmer, bei größeren Behältern Schlauchskimmer eingesetzt. Solche Skimmersysteme sind wenig wirksam, wenn durch den Betrieb der Bearbeitungsmaschinen das KSS-Bad ständig durchmischt und die Fremdöle dadurch ständig in dem KSS emulgiert werden. Es kann sich dadurch keine aufschwimmende geschlossene Fremdölschicht ausbilden. Solche Systeme werden daher vorwiegend während der Stillstandzeiten der Bearbeitungsmaschinen eingesetzt. Auch hier bleibt das Problem der biologischen Zersetzung und des biologischen Umkippens der KSS-Bäder ungelöst.

Im Gegensatz zu diesen genannten Verfahren, bei welchen das Aufschwimmen des Fremdöls und das Sedimentieren der Schwimmanteile auf der natürlichen Schwerkraft beruht, wird bei Zentrifugalseparatoren die Phasentrennung durch Zentrifugalkräfte verstärkt.

Die KSS-Emulsion und die Fremdöle werden z.B. in Tellerseparatoren kontinuierlich getrennt und die abgeschiedenen Schlammteile von Zeit zu Zeit ausgetragen. Wegen der relativ hohen Investitionskosten sind solche Zentrifugalseparatoren nur bei Zentralanlagen oder in Verbindung mit einer größeren Anzahl von Einzelanlagen wirtschaftlich. Auch die Zentrifugalseparatoren haben in Bezug auf das Problem der biologischen Zersetzung und des biologischen Umkippens der KSS-Bäder keine Wirksamkeit.

Weiter sind Flotationsverfahren bekannt, bei welchen die Schwerkraftabscheidung durch das Einbringen von feinen Luftblasen in die KSS-Emulsion beschleunigt wird. Die feinen Luftblasen lagern sich an Fremdöltropfen und Schmutzteilchen an, wodurch sich deren Auftriebskraft wesentlich erhöht. Durch die Dispersion der feinen Luftbläschen wird die KSS-Emulsion mit Luftsauerstoff angereichert, wodurch zumindest einem Wachstum und einer Anreicherung von anaeroben Bakterien und einem Umkippen der KSS-Emulsion entgegengewirkt wird. Das Einbringen von Luftbläschen in einer für eine optimale Flotation geeigneten Größe ist schwierig zu steuern. Der Eintrag von Luftsauerstoff bewirkt keine direkte Keimreduzierung, sondern wirkt nur einem Wachstum und einer Zunahme von anaeroben Mikroorganismen entgegen.

Die deutsche Offenlegungsschrift DE 42 30 765 A1 beschreibt ein Verfahren zur Wiederaufbereitung von gebrauchten ölhaltigen Emulsionen, bei dem die Verfahrensschritte auf eine Gewinnung eines Filtrats ausgerichtet sind, das zur Neuherstellung von ölhaltigen Emulsionen benutzt werden kann. So wird die KSS-Emulsion durch Fällungschemikalien, die entweder zugegeben oder von einer Opferanode freigesetzt werden, zunächst zerstört, um feste von wässrigen Anteilen in der KSS-Emulsion zu separieren. Auch hier wird eine positive Beeinflussung der biologischen Beschaffenheit des KSS im Sinne seiner Gebrauchszeitverlängerung nicht bewirkt.

Schließlich werden bei Bearbeitungsmaschinen in der Regel Filter eingesetzt, die sich jedoch im wesentlichen nur zur Abtrennung von Schlämmen und Feinspänen eignen, Fremdöle jedoch kaum abtrennen können. Solche Filtrationssysteme neigen zur Verstopfung, so daß ein relativ hoher Wartungsaufwand erforderlich ist. Die biologische Zersetzung und das biologische Umkippen der KSS-Bäder kann durch solche Filtereinrichtungen nicht verhindert werden.

All den vorbekannten Verfahren zur Beseitigung von Fremdölen und festen Fremdstoffen aus einem KSS ist gemeinsam, daß sie eine Trennung der Phasen des KSS-Gemisches bewirken, den KSS also zersetzen, um zum einen feste Schlammanteile entsorgbar zu machen, die nach ihrer Abschöpfung z. B. verbrannt werden können, und andererseits den im KSS enthaltenen Wasseranteil abzuleiten. Diese Behandlung eines KSS erweist sich jedoch als unwirtschaftlich, weil die funktionalen Eigenschaften eines KSS, wie seine Schmier- und Kühlwirkung, die im wesentlichen durch die chemische Zusammensetzung und Beschaffenheit seines Konzentrats bestimmt werden, im maschinellen Bearbeitungsprozeß durchaus längere Zeit zur Verfügung stehen und damit auch genutzt werden könnten, wenn der KSS seine Gebrauchsfähigkeit durch biologische Einträge und Wirkungen, die ihn unhygienisch und übelriechend werden lassen, nicht vorzeitig einbüßen würde.

Der Erfindung liegt daher die Aufgabe zugrunde, ein Verfahren und eine Vorrichtung zur Verlängerung der Gebrauchsfähigkeit eines Kühlschmierstoffs für Bearbeitungsmaschinen zu schaffen, welche eine effektive Wiederaufbereitung des Kühlschmierstoffes bewirken und die Gefahr einer biologischen Beeinträchtigung der Gebrauchsfähigkeit des Kühlschmierstoffes reduzieren. Mithin soll die KSS-Emulsion in einem biologieunfreundlichen, aber umweltverträglichen Gleichgewichtszustand gehalten oder bei Störeinflüssen in diesen zurückgeführt werden. Diese Aufgabe ist unter der Maßgabe zu lösen, daß die die funktionalen Eigenschaften der KSS-Emulsion bestimmende chemische Zusammensetzung der KSS-Emulsion nicht verändert werden darf.

Diese Aufgabe wird erfindungsgemäß gelöst durch ein Verfahren mit den Merkmalen des Anspruchs 1 und eine Vorrichtung mit den Merkmalen des Anspruchs 5.

Vorteilhafte Ausführungen und Weiterbildungen der erfindungsgemäßen Vorrichtung sind in den jeweils abhängigen Ansprüchen angegeben.

Erfindungsgemäß wird die zu behandelnde KSS-Emulsion durch eine Elektrolyseeinrichtung gepumpt. An den Elektroden entstehen feinste Wasserstoff- und Sauerstoffgasbläschen, die in die KSS-Emulsion eingetragen werden. Der fein dispergiert und in intensiver Durchmischung eingetragene Sauerstoff bewirkt eine hohe bis zur Sättigung oder Übersättigung führende Sauerstoffbeladung der KSS-Emulsion. Diese hohe Sauerstoffbeladung hemmt die Entwicklung und das Wachstum anaerober Mikroorganismen, so daß Zersetzungsvorgänge der KSS-Emulsion durch solche anaeroben Mikroorganismen, wie Bakterien, Hefen und Pilze weitestgehend verhindert werden.

Da der Sauerstoff an der Anode der Elektrolyseeinrichtung in atomarer Form entsteht, wird ein Teil der in der KSS-Emulsion bereits vorhandenen Mikroorganismen unmittelbar oxidiert und somit unschädlich gemacht. Darüber hinaus kann bei einem direkten Kontakt der Mikroorganismen mit den Elektroden der Elektrolyseeinrichtung oder durch elektrische Feldeinwirkung deren Zellstruktur geschädigt werden, wodurch ebenfalls eine Keimreduzierung bewirkt wird. Das erfindungsgemäße Verfahren hemmt somit nicht nur die Weiterentwicklung vorhandener Mikroorganismen, sondern führt darüber hinaus auch zu einer Reduzierung vorhandener Keime durch die elektrolytische Oxidation.

Weiter wird der feindispergierte Eintrag von elektrolytisch erzeugten Gasbläschen erfindungsgemäß zur Flotation in einem an die Elektrolyseeinrichtung angeschlossenen Phasentrenner ausgenutzt. In dem Phasentrenner steigen die Gasbläschen mit zunächst sehr geringer Größe und in sehr feiner Verteilung auf, so daß sich eine gute Anlagerung der Gasbläschen an dispergiertes Fremdöl und Schmutzpartikel ergibt. Die mit den Gasbläschen behafteten Schmutzteilchen und Fremdöltröpfchen steigen aufgrund der mit zunehmender Anlagerung schnell anwachsenden Auftriebskraft an die Oberfläche und bilden dort eine dichte Öl-Schlamm-Schicht. Die anfangs sehr feine Verteilung kleiner Gasbläschen begünstigt die Anlagerung der Gasbläschen an die Schmutzpartikel und Fremdöltröpfchen, während das Anlagern der Gasbläschen und die Koaleszenz der Fremdöltröpfchen dann zu einem schnellen Aufschwimmen des Fremdöls und der Schmutzpartikel führt. Nach dem Abtrennen verschmutzender und belastender Fremdstoffe wird die derart gereinigte KSS-Emulsion aus dem Phasentrenner wieder der Bearbeitungsmaschine zur Weiterverwendung zugeführt.

Im folgenden wird die Erfindung anhand eines in der Zeichnung dargestellten Ausführungsbeispiels näher erläutert, wobei weitere Merkmale und Vorteile der Erfindung deutlich werden. Es zeigen
- Figur 1: schematisch eine Vorrichtung zur Verlängerung der Gebrauchsfähigkeit von wassergemischten Kühlschmierstoffen im Verbund mit einer Bearbeitungsmaschine zur Verdeutlichung der Gesamtfunktion und des Verfahrensablaufs,
- Figur 2A: ein Ausführungsbeispiel einer Elektrolyseeinrichtung in einer Längsschnittdarstellung,
- Figur 2B: die in der Figur 2A dargestellte Elektrolyseeinrichtung in ihrer Draufsicht,
- Figur 3: schematisch die Funktionsweise des Phasentrenners dieser Vorrichtung und
- Figur 4: in Form eines Diagramms das mit dem erfindungsgemäßen Verfahren und der erfindungsgemäßen Vorrichtung erzielbare Ergebnis.

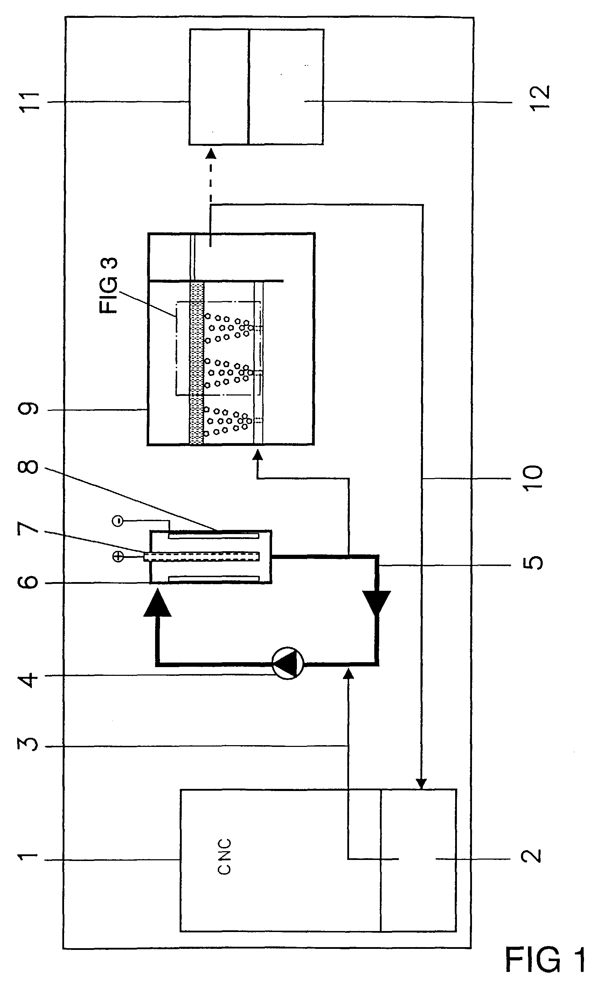

Gemäß der Darstellung in der **Figur 1** werden in einer Bearbeitungsmaschine 1, z.B. einer spanabhebenden CNC-Werkzeugmaschine, wassergemischte Kühlschmierstoffe verwendet. Die gebrauchte KSS-Emulsion wird in einer Auffangwanne 2 der Bearbeitungsmaschine 1 gesammelt. Die KSS-Emulsion wird über eine Saugleitung 3 mittels einer Förderpumpe 4 aus der Auffangwanne 2 abgesaugt und einer Elektrolyseeinrichtung 8 zugeführt. Ein Schutzsieb an der Saugleitung 3 verhindert, daß grobe Metallspäne, z.B. Metallspäne größer als 2 mm in die Behandlungsvorrichtung gelangen.

Nach dem Durchtritt durch die Elektrolyseeinrichtung 8 gelangt die KSS-Emulsion in einen Phasentrenner 9.

Bei Bedarf kann die KSS-Emulsion auch mehrmals im Kreislauf durch die Elektrolyseeinrichtung 8 geleitet werden. Hierzu ist eine Zirkulationsleitung 5 vorgesehen, über welche die Förderpumpe 4 die aus der Elektrolyseeinrichtung 8 austretende KSS-Emulsion wieder dem Einlaß der Elektrolyseeinrichtung 8 zuführt.

Als Förderpumpe 4 wird eine Pumpe verwendet, die die KSS-Emulsion möglichst schonend fördert. Bei der Förderung der KSS-Emulsion durch die Förderpumpe 4 sollen die in der KSS-Emulsion bereits gebildeten größeren Fremdöltröpfchen möglichst wenig zerstört und rückemulgiert werden. Zur Verwendung als Förderpumpe 4 eignen sich beispielsweise Schlauchpumpen oder Exzenterpumpen.

Die Elektrolyseeinrichtung 8 weist als Elektroden eine Kathode 6 und eine Anode 7 auf, durch welche einzelne Wassermoleküle der KSS-Emulsion elektrolytisch gespalten werden. An der Kathode 6 bildet sich u.a. atomarer Wasserstoff und an der Anode 7 u.a. atomarer Sauerstoff. Die Elektrolyseeinrichtung 8 und die Elektroden 6 und 7 sind geometrisch so gestaltet, daß die sich an den Elektroden 6 und 7 bildenden Gasbläschen durch die hindurchströmende KSS-Emulsion sehr leicht mitgenommen werden. Dadurch wird erreicht, daß sich an den Elektroden 6 und 7 keine größeren Gasbläschen bilden, sondern die Gasbläschen mit einer geringen Größe, z.B. mit einem Durchmesser kleiner 50 µm mitgenommen und in die KSS-Emulsion dispergiert werden. Die KSS-Emulsion wird auf diese Weise mit feinsten Gasbläschen in feiner Verteilung angereichert. Nach einmaligen oder mehrmaligem Durchströmen durch die Elektrolyseeinrichtung 8 ist die KSS-Emulsion auf diese Weise mit feinsten Sauerstoffgasbläschen bis zur Sättigung oder Übersättigung angereichert, wodurch sich auch ein angenehm frischer Duft der KSS-Emulsion einstellt.

Die Kathode 6 und die Anode 7 bestehen aus einem inerten Material, welches durch den Elektrolysevorgang nicht angegriffen wird. Als Werkstoff für die Elektroden 6 und 7 können z.B. platinbeschichtete oder titanbeschichtete Metalle sowie mit einem Mischoxid beschichtete Ausführungen gewählt werden. Handelsübliche Edelstahlelektroden eignen sich für den Dauerbetrieb weniger. Die Elektroden 6 und 7 müssen derart beschaffen sein, daß sie während des Elektrolysevorgangs weder durch Materialanlagerung zur Verkrustung neigen noch durch Materialablösungen eine Zersetzung der KSS-Emulsion herbeiführen oder fördern.

Damit die sich elektrolytisch bildenden Gasbläschen möglichst frühzeitig und mit geringer Größe durch die KSS-Emulsion mitgenommen werden und möglichst fein in der KSS-Emulsion dispergiert werden, sind die Elektroden 6 und 7 so ausgebildet, daß sie eine möglichst große von der KSS-Emulsion umströmte Oberfläche aufweisen. Außerdem ist es vorteilhaft, die Elektroden 6 und 7 so auszubilden, daß sie starke Krümmungen der Oberfläche aufweisen. Solche starken Krümmungen der Oberfläche bewirken zum einen aufgrund der Konzentrierung der Feldlinien eine verstärkte Bildung der Gasbläschen und erleichtern zum anderen die Ablösung der Gasbläschen von den Elektroden 6 und 7, so daß die Gasbläschen bereits in einem sehr frühen Stadium mit geringem Durchmesser durch die KSS-Emulsion mitgerissen werden.

Um eine möglichst große Oberfläche der Elektroden 6 und 7 und eine optimale Umströmung der Elektroden 6 und 7 zu erreichen, werden beispielsweise Gitterelektroden, Mehrplattenelektroden, Stabelektroden oder Flachelektroden bevorzugt verwendet. Eine koaxiale Ausbildung der Elektroden 6 und 7 in einer rohrförmigen Elektrolyseeinrichtung 8 hat den Vorteil, daß eine hohe Strömungsgeschwindigkeit der KSS-Emulsion erzeugt wird, die die Mitnahme der gebildeten Gasbläschen begünstigt.

Die Strömungsrichtung der in die Elektrolyseeinrichtung 8 eingeleiteten KSS-Emulsion sollte vorzugsweise in Richtung der geometrisch längsten Ausdehnung der Elektroden 6 und 7 erfolgen, damit sich eine hohe Kontaktwahrscheinlichkeit der in der KSS-Emulsion enthaltenen Mikroorganismen mit den Elektroden 6 oder 7 der Elektrolyseeinrichtung 8 ergibt, so daß die Zahl der in der KSS-Emulsion enthaltenen Mikroorganismen durch Kontaktoxydation oder Kontaktreduktion nachhaltig verringert wird.

Es hat sich als vorteilhaft erwiesen, wenn die von der Strömungsgeschwindigkeit und der Länge der Elektrolyseeinrichtung 8 abhängige Verweilzeit der in die Elektrolyseeinrichtung 8 eingeleiteten KSS-Emulsion länger als zwei Sekunden beträgt, um eine ausreichende Reaktionszeit der in der KSS-Emulsion enthaltenen Mikroorganismen mit dem in der Elektrolyseeinrichtung 8 freigesetzten atomaren Sauerstoff zu ermöglichen.

Bei gängigen CNC-Werkzeugmaschinen werden üblicherweise KSS-Mengen von 200 bis 300 l/Std. behandelt. Bei solchen KSS-Mengen haben sich für einen effizienten Einsatz des erfindungsgemäßen Verfahrens Elektrolyseeinrichtungen 8 mit darin enthaltenen Elektroden 6 und 7 mit sich in Strömungsrichtung der KSS-Emulsion erstreckenden Längen von mehr als 300 mm und Strömungsgeschwindigkeiten von etwa 0,1 m/s bis 3,0 m/s bewährt.

Einerseits wird demnach eine möglichst lange Verweilzeit der in die Elektrolyseeinrichtung 8 eingeleiteten KSS-Emulsion gewünscht, andererseits ist eine möglichst hohe Strömungsgeschwindigkeit der KSS-Emulsion vorteilhaft, weil diese in der Elektrolyseeinrichtung 8 die Mitnahme der an den Elektroden 6 und 7 gebildeten Gasbläschen begünstigt. Die Strömungsgeschwindigkeit der KSS-Emulsion muß größer sein als die Auftriebsgeschwindigkeit der Gasbläschen in der Elektrolyseeinrichtung 8. Auch muß die Strömungsgeschwindigkeit der KSS-Emulsion so bemessen sein, daß in der Elektrolyseeinrichtung 8 kein Zusammenschluß der Gasbläschen zu großen Blasen von mehr als 50 µm Blasendurchmesser erfolgt. Bei Durchflußvolumina von über 300 l/Std. empfiehlt es sich, die Elektrolyseeinrichtung 8 mehrfach parallel zueinander anzuordnen.

Bei dem in der Figur 1 dargestellten Ausführungsbeispiel ist die Elektrolyseeinrichtung 8 rohrförmig ausgebildet. Die Kathode 6 ist als Mantel an der Innenwandung der Elektrolyseeinrichtung 8 angeordnet, während die Anode 7 als Stabanode in der Mittelachse der Elektrolyseeinrichtung 8 angeordnet ist.

Beim Durchströmen der KSS-Emulsion durch die Elektrolyseeinrichtung 8 entsteht an der Anode 7 atomarer Sauerstoff, der in der KSS-Emulsion vorhandene Mikroorganismen oxidiert und unschädlich macht. Weiter kommen die in der KSS-Emulsion enthaltenen Mikroorganismen mit der Kathode 6 und der Anode 7 in direkten Kontakt, wodurch ihre Zellstruktur nachhaltig geschädigt wird und die Mikroorganismen ebenfalls vernichtet werden. Das Durchströmen der KSS-Emulsion durch die Elektrolyseeinrichtung 8 bewirkt auf diese Weise eine erhebliche Reduzierung der in der KSS-Emulsion vorhandenen Keime.

Weiter wird die KSS-Emulsion beim Durchströmen der Elektrolyseeinrichtung 8 mit feinsten Sauerstoff-Gasbläschen in feinster Dispersion angereichert, wobei eine Anreicherung bis zur Sättigung oder sogar bis zur Übersättigung stattfinden kann. Die hohe Sauerstoffbeladung der KSS-Emulsion hemmt eine Entwicklung und Anreicherung von anaeroben Bakterien in der KSS-Emulsion, die zu einem biologischen Umkippen der Emulsion führen könnten.

Da die KSS-Emulsion im Laufe ihrer Gebrauchsdauer aufgrund der in sie eingebrachten Stoffeinträge an Leitfähigkeit zunimmt, ist es von Vorteil, den Stromfluß zwischen den Elektroden 6 und 7 zu messen und durch eine geeignete Schaltungsanordnung auf einen zumindest annähernd konstanten Wert von beispielsweise unter 4 Ampere Gleichstrom zu regeln, indem die an den Elektroden 6 und 7 angelegte elektrische Spannung beispielsweise in einem Bereich von 2 bis 48 Volt nachgeführt wird.

Um eine Belagbildung auf den Elektroden 6 und 7 zu vermeiden, beispielsweise durch Anlagerung einer Eisenschicht auf der Kathode, ist es vorteilhaft, wenn die Schaltungsanordnung die Polarität der an den Elektroden 6 und 7 anliegenden Spannung gelegentlich, d. h. von Zeit zu Zeit umpolt. Dieses kann beispielsweise nach jedem Einschalten der Elektrolyseeinrichtung 8 erfolgen.

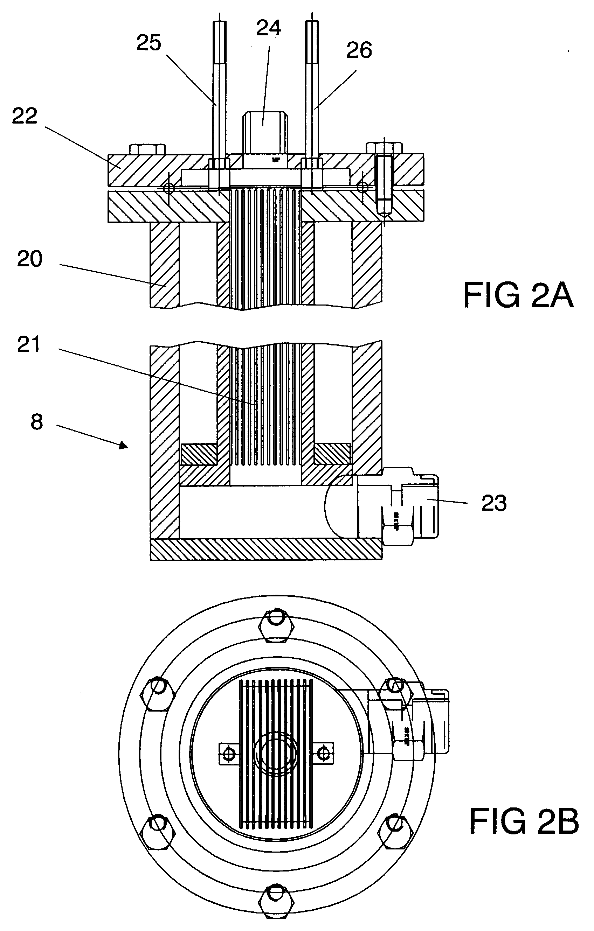

Die **Figuren 2A und 2B** zeigen ein weiteres Ausführungsbeispiel für die Elektrolyseeinrichtung 8. In einem zylinderförmigen Gehäuse 20 sind in dichtem Abstand über die gesamte Bauhöhe der Elektrolyseeinrichtung 8 mehrere großflächige, flachbauende Elektroden 21 angeordnet. Der Elektrodenabstand ist so gewählt, daß von der KSS-Emulsion mitgeführte Feinpartikeleinträge die Elektrolyseeinrichtung 8 ungehindert passieren, daß sich andererseits aber auch ein starkes, weitgehend homogenes elektrisches Feld zwischen den Elektroden aufbauen kann und ein ausreichender Stromfluß zwischen den Elektroden sichergestellt ist. Denn das zwischen den so angeordneten Elektroden entstehende elektrische Feld besitzt bei entsprechender elektrischer Ansteuerung der Elektroden eine ausreichende Feldstärke, um die Zellstruktur der in der KSS-Emulsion enthaltenen Mikroorganismen nachhaltig zu schädigen.

In der Praxis haben sich Flachelektrodensysteme von 4 bis 10 Elektroden mit einer Elektrodendicke von 1 bis 2 mm und einem Elektrodenabstand von 1 bis 3 mm bewährt, wobei die Flachelektroden plattenförmig oder gitterförmig ausgebildet sein können. Flachelektrodensysteme der dargestellten Bauart führen zu einer hohen Kontaktwahrscheinlichkeit der in der KSS-Emulsion mitgeführten Mikroorganismen mit den Plattenelektroden und erfüllen auch die Forderung, daß die durch die Elektrolyseeinrichtung 8 hindurchströmende KSS-Emulsion die elektrolytisch erzeugten Gasbläschen von den Elektroden mitreißt.

Zur Wartung der Elektrolyseeinrichtung 8 ist diese mit einem verschraubbaren Deckel 22 ausgestattet. Die KSS-Emulsion wird beispielsweise über einen Stutzen 23 in die Elektrolyseeinrichtung 8 eingeführt. An einem Schlauch- oder Rohranschluß 24 tritt die KSS-Emulsion nach dem Passieren des Elektrodensystems wieder aus der Elektrolyseeinrichtung 8 aus. Die Kontaktstifte 25 und 26 dienen dem elektrischen Anschluß der Elektroden.

Nach einmaligem oder mehrmaligem Durchströmen der Elektrolyseeinrichtung 8 wird die mit den feinen und feinstverteilten Sauerstoff- und Wasserstoff-Gasbläschen beladene KSS-Emulsion in den Phasentrenner 9 geleitet.

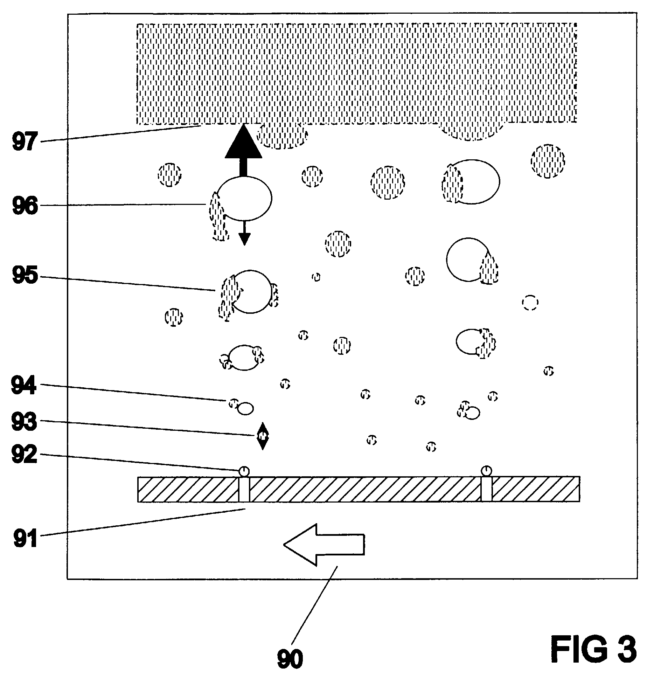

Der Phasentrenner 9 weist, wie in der **Figur 3** schematisch dargestellt, in seinem unteren Bereich einen horizontal angeordneten großflächigen Verteiler 91 auf, der als Gitter, Lochblech, Rost oder dergleichen ausgebildet ist. Die von der Elektrolyseeinrichtung 8 kommende KSS-Emulsion wird unter diesem Verteiler 91 zugeführt, wie es in der Figur 3 durch den Pfeil 90 angedeutet ist. Der Verteiler 91 bewirkt, daß die zugeführte KSS-Emulsion sich gleichmäßig über die Grundfläche des Phasentrenners 9 verteilt und die Strömung der KSS-Emulsion beruhigt wird. Die in der KSS-Emulsion fein dispergierten Gasbläschen 92 treten durch die Öffnungen des Verteilers 91 hindurch und steigen in dem Phasentrenner 9 aufgrund ihres Auftriebs hoch. Zunächst sind die Gasbläschen 92 in der KSS-Emulsion mit geringer Größe und in feiner Verteilung enthalten, so daß sie langsam und in großer Dichte aufsteigen. Dadurch ergibt sich eine hohe Effizienz für die Anlagerung der Gasbläschen 92 an Fremdöltropfen 93 oder Schmutzpartikeln, die in der KSS-Emulsion emulgiert sind und mit geringem Auftrieb in der KSS-Emulsion schweben.

Durch die Anlagerung der feinen Gasbläschen 92 an die Fremdöltröpfchen 93, wie dies mit 94 angedeutet ist, erhöht sich der Auftrieb der Öltröpfchen 93. Beim weiteren Aufsteigen der Öltröpfchen mit den angelagerten Gasbläschen koaleszieren die kleinen Fremdöltröpfchen zu größeren Fremdöltröpfchen, wobei sich weitere Gasbläschen anlagern können, wie dies mit 95 angedeutet ist. Durch diese kinetische Koaleszenz und das weitere Anlagern von Gasbläschen ergibt sich eine Vergrößerung der Fremdöltröpfchen und ein schneller Auftrieb, wie dies mit 96 angedeutet ist. Dadurch bildet sich an der Oberfläche der KSS-Emulsion in dem Phasentrenner 9 eine Schwimmschicht 97 aus Fremdölen oder Schmutzpartikeln.

Die Schwimmschicht 97 wird aus dem Phasentrenner 9 in an sich bekannter Weise über einen Ablaßhahn oder über eine spezielle Skimmereinrichtung abgezogen. Die sich unterhalb der Schwimmschicht 97 ansammelnde gereinigte KSS-Emulsion wird in ebenfalls an sich bekannter Weise, vorzugsweise nach Passieren mehrerer Strömungsschikanen aus dem Phasentrenner 9 abgeführt. Die gereinigte KSS-Emulsion kann über eine Rückführleitung 10 unmittelbar zu der Bearbeitungsmaschine 1 zurückgeführt werden, wenn die Vorrichtung im Bypass-Betrieb an die laufende Bearbeitungsmaschine 1 angeschlossen ist. Der Arbeitsprozeß an der Bearbeitungsmaschine muß bei dieser KSS-Pflege im Bypass-Betrieb nicht unterbrochen werden. Ebenso ist es möglich, in einem separaten Behälter 11 die aufbereitete KSS-Emulsion 12 zu sammeln und der Bearbeitungsmaschine 1, z.B. nach einer Generalreinigung zuzuführen. Ebenso können über einen zentralen Sammelbehälter 11 mehrere Bearbeitungsmaschinen mit der aufbereiteten KSS-Emulsion beschickt werden. Je nach Größe und Fassungsvermögen der Vorrichtung kann diese mobil ausgebildet sein und zur Pflege des KSS an die Bearbeitungsmaschine gefahren werden oder als stationäre Anlage zentral für mehrere Bearbeitungsmaschinen eingesetzt werden.

Das erfindungsgemäße Verfahren zur Verlängerung der Gebrauchsfähigkeit eines Kühlschmierstoffs und die Vorrichtung zur Durchführung dieses Verfahrens haben den Vorteil, daß der KSS in seiner durch sein KSS-Konzentrat definierten Beschaffenheit nicht beeinträchtigt oder gar zerstört wird, wie es beispielsweise bei anderen Verfahren durch die Einbringung oder Erzeugung von irgendwelchen Fällungschemikalien der Fall ist, sondern daß hier neben der rein physikalischen Reinigung der KSS-Emulsion von Fremdölen und festen Fremdstoffen vorrangig die KSS-Emulsion kontaminierende Mikroorganismen entfernt oder zumindest massiv an ihrer Vermehrung gehindert werden, so daß nach der Durchführung des erfindungsgemäßen Verfahrens die KSS-Emulsion zur weiteren bestimmungsgemäßen Verwendung zur Verfügung steht. Außerdem wird die KSS-Emulsion durch die hoch dosierte Sauerstoffdurchsetzung mit einem frischen Duft versehen, was die Weiterverwendung der KSS-Emulsion für das die Bearbeitungsmaschine bedienende Personal im Gegensatz zu den bisher oftmals angetroffenen Bedingungen angenehm macht.

Das erfindungsgemäße Verfahren reduziert in erheblichem Umfang die in der KSS-Emulsion enthaltene bzw. während der bestimmungsgemäßen Verwendung der KSS-Emulsion unvermeidbar ansteigende Keimzahl durch Zerstörung und Ausschwemmung von in der KSS-Emulsion enthaltenen Mikroorganismen sowie durch eine nachhaltige Beeinträchtigung des Zellwachstums der Mikroorganismen. Dadurch wird die KSS-Emulsion vor dem Umkippen bewahrt. In der Folge wird damit auch nachhaltig verhindert, daß die in der KSS-Emulsion enthaltenen Mikroorganismen gelöste KSS-Konzentratbestandteile durch Stoffwechselvorgänge vernichten, wodurch die funktionalen Eigenschaften der KSS-Emulsion beeinträchtigt würden.

Überdies aktiviert das erfindungsgemäße Verfahren auf vorteilhafte Weise die Depotwirkung von in der KSS-Emulsion gelöstem Chlorid. Dadurch, daß die wässrige Phase der KSS-Emulsion regelmäßig durch gechlortes Leitungswasser angesetzt oder solches zumindest immer wieder zugesetzt wird, enthält die KSS-Emulsion auch begünstigt durch die Temperatur der KSS-Emulsion gelöstes Chloridionen, die in der Elektrolyseeinrichtung durch den elektrischen Stromfluß zur Reaktion mit den Zellstrukturen der Mikroorganismen angeregt werden, wodurch zusätzlich eine keimtötende Wirkung nutzbar gemacht wird. Der Fachmann versteht, daß die Chloridionen durch die Elektrolyse in gelöstes Chlor umgewandelt wird, das bekanntlich eine hohe Entkeimungswirkung besitzt.

Zusammenschauend läßt sich sagen, daß das erfindungsgemäße Verfahren und die dazugehörende Vorrichtung die KSS-Emulsion in einem für die Gebrauchsfähigkeit der KSS-Emulsion ausschlaggebenden Gleichgewichtszustand hält bzw. Störeinflüssen entgegenwirkt, bis dieser Gleichgewichtszustand wieder erreicht ist, wobei als Gleichgewichtszustand für einen KSS derjenige Zustand verstanden werden soll, der durch die vom Anwender gewünschten, originären funktionalen Eigenschaften des KSS, wie seine Schmier- und Kühlwirkung, die im wesentlichen durch die chemische Zusammensetzung und Beschaffenheit seines Konzentrats bestimmt werden, definiert ist.

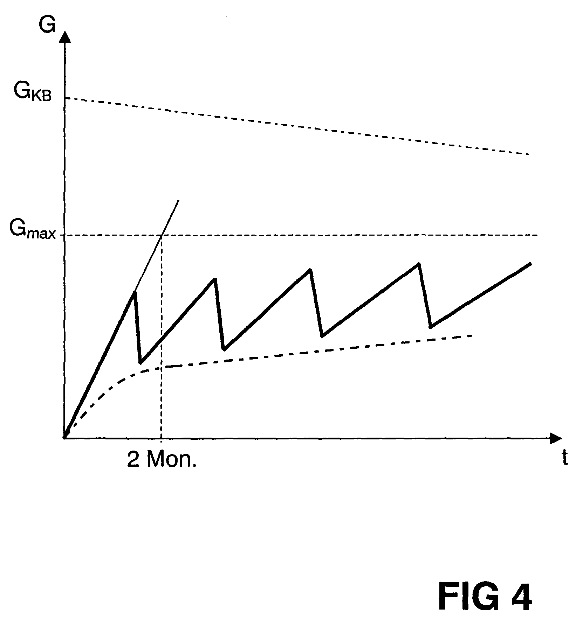

Dieses Ergebnis wird durch das in der **Figur 4** dargestellte Diagramm verdeutlicht. Über der Zeit t ist als Parameter die Gebrauchsfähigkeit G der KSS-Emulsion aufgetragen. Gesetzliche und arbeitshygienische Vorschriften definieren eine obere Grenze Gₘₐₓ, bis zu der die KSS-Emulsion aufgrund einer in ihr enthaltenen Keimzahl verwendet werden darf. Diese auf die Keimzahl bezogene Grenze Gₘₐₓ ist jedoch nicht identisch mit der zeitlich fallenden substanzabhängigen Grenze G_{KB}, bis zu der die KSS-Emulsion aufgrund ihrer durch die chemische Zusammensetzung und Beschaffenheit des KSS-Konzentrats bestimmten funktionalen Eigenschaften verwendet werden könnte. In dem in der Figur 4 skizzierten Beispiel mag die KSS-Emulsion nach einer Gebrauchsdauer von 2 Monaten den arbeitshygienischen Grenzwert Gₘₐₓ erreichen und müßte jetzt entsorgt und ersetzt werden, obwohl ihre Schmier- und Kühlwirkung eigentlich noch nutzbar wären.

Durch Anwendung des erfindungsgemäßen Verfahrens in der dazugehörigen Vorrichtung wird rechtzeitig vor Erreichen der Grenze Gₘₐₓ die KSS-Emulsion von kontaminierenden Mikroorganismen gereinigt, wodurch die in der KSS-Emulsion enthaltene Keimzahl erheblich herabgesetzt wird. Es versteht sich, daß in der Praxis im gesamten Leitungssystem für die KSS-Emulsion nicht alle Bakteriennester - beispielsweise solche in den strömungsberuhigten Ecken der Sammelbehälter der Bearbeitungsmaschine - vernichtet werden können, so daß in der KSS-Emulsion eine gewisse, arbeitshygienisch aber vertretbare Restkeimzahl bestehen bleibt.

Nach einiger Zeit wird der erfindungsgemäße Reinigungsvorgang wiederholt oder aber die KSS-Emulsion wird in Verbindung mit einer Bearbeitungsmaschine in einem geschlossenen Kreislauf betrieben. Im letzteren Fall mag sich die Qualität der Gebrauchsfähigkeit der KSS-Emulsion so entwickeln, wie es im Diagramm durch die strichpunktierte Linie angedeutet ist. Im Ergebnis wird dadurch die Gebrauchsfähigkeit eines Kühlschmierstoffs erheblich verlängert, wobei seine funktionalen Eigenschaften bedeutend besser genutzt werden, was die Wirtschaftlichkeit eines Kühlschmierstoffs wesentlich verbessert.

## Patentansprüche

1. Verfahren zur Verlängerung der Gebrauchsfähigkeit eines Kühlschmierstoffs für Bearbeitungsmaschinen (1),
a) bei welchem die gebrauchte Kühlschmierstoff-Emulsion durch eine Elektrolyseeinrichtung (8) geleitet wird,
b) bei welchem in der Elektrolyseeinrichtung (8) aus dem in der Kühlschmierstoff-Emulsion enthaltenen Wasser elektrolytisch Sauerstoffgas und Wasserstoffgas erzeugt wird,
c) bei welchem die elektrolytische Spaltung der Wassermoleküle in der Elektrolyseeinrichtung (8) mit inerten Elektroden (6, 7) durchgeführt wird,
d) bei welchem das erzeugte Sauerstoffgas und Wasserstoffgas in Form von Gasbläschen mit einem Bläschendurchmesser sehr geringer Größe in die Kühlschmierstoff-Emulsion fein dispergiert und in intensiver Durchmischung eingetragen wird,
e) bei welchem das elektrolytisch erzeugte Sauerstoffgas in die Kühlschmierstoff-Emulsion bis zu dessen Sättigung oder Übersättigung eingetragen wird,
f) bei welchem in der Kühlschmierstoff-Emulsion enthaltene Mikroorganismen in der Elektrolyseeinrichtung (8) durch den anodisch gebildeten atomaren Sauerstoff oxidiert werden,
g) bei welchem in der Kühlschmierstoff-Emulsion enthaltene Mikroorganismen durch direkten Kontakt mit den Elektroden (6, 7) der Elektrolyseeinrichtung (8) geschädigt werden,
h) bei welchem die in der Elektrolyseeinrichtung (8) mit Gasbläschen beladene Kühlschmierstoff-Emulsion in einen Phasentrenner (9) geleitet wird, in welchem die Gasbläschen großflächig verteilt aufsteigen und sich an in der Kühlschmierstoff-Emulsion enthaltenen Schmutzpartikeln und Fremdöltröpfchen anlagern,
i) bei welchem die sich oben in dem Phasentrenner (9) ansammelnde Schwimmschicht entfernt wird und
j) bei welchem die gereinigte Kühlschmierstoff-Emulsion aus dem Phasentrenner (9) einer Wiederverwendung als Kühlschmierstoff-Emulsion zugeführt wird.

2. Verfahren nach Anspruch 1,
bei welchem die in die Elektrolyseeinrichtung (8) eingeleitete Kühlschmierstoff-Emulsion die Elektrolyseeinrichtung (8) in Richtung der geometrisch längsten Ausdehnung der Elektroden (6, 7) durchströmt, um eine hohe Kontaktwahrscheinlichkeit der in der Kühlschmierstoff-Emulsion enthaltenen Mikroorganismen mit den Elektroden (6, 7) der Elektrolyseeinrichtung (8) zu erzeugen.

3. Verfahren nach einem der vorangegangenen Ansprüche,
bei welchem die von der Strömungsgeschwindigkeit und der Länge der Elektrolyseeinrichtung (8) abhängige Verweilzeit der in die Elektrolyseeinrichtung (8) eingeleiteten Kühlschmierstoff-Emulsion so bemessen ist, daß eine ausreichende Reaktionszeit der in der Kühlschmierstoff-Emulsion enthaltenen Mikroorganismen mit dem in der Elektrolyseeinrichtung (8) freigesetzten atomaren Sauerstoff ermöglicht wird.

4. Verfahren nach einem der vorangegangenen Ansprüche,
bei welchem die Depotwirkung von in der wässrigen Phase der Kühlschmierstoff-Emulsion gelösten Chloridionen durch den in der Elektrolyseeinrichtung (8) erzeugten elektrischen Stromfluß zur Reaktion mit den Zellstrukturen der Mikroorganismen aktiviert wird.

5. Vorrichtung zur Verlängerung der Gebrauchsfähigkeit eines Kühlschmierstoffs für Bearbeitungsmaschinen (1),
a) mit einer Elektrolyseeinrichtung (8), durch welche die Kühlschmierstoff-Emulsion geleitet wird,
b) mit in der Elektrolyseeinrichtung (8) angeordneten inerten Elektroden (6, 7), die von der Kühlschmierstoff-Emulsion großflächig umströmt werden,
c) mit einem zwischen den Elektroden (6, 7) bestehenden elektrischen Feld so großer Feldstärke, daß die Zellstruktur von in der Kühlschmierstoff-Emulsion enthaltenen Mikroorganismen nachhaltig geschädigt wird und
d) mit einem der Elektrolyseeinrichtung (8) nachgeschalteten Phasentrenner (9), in welchem eine Flotation der in der Kühlschmierstoff-Emulsion enthaltenen Fremdöle und Schmutzpartikel durch Anlagerung der Gasbläschen stattfindet, die in der Elektrolyseeinrichtung (8) in die Kühlschmierstoff-Emulsion dispergiert werden.

6. Vorrichtung nach Anspruch 5, **dadurch gekennzeichnet**, daß die Elektroden (6, 7) der Elektrolyseeinrichtung (8) aus platinbeschichteten oder titanbeschichteten Metallen bestehen oder eine Mischoxidbeschichtung aufweisen.

7. Vorrichtung nach Anspruch 5 oder 6, **dadurch gekennzeichnet**, daß die Elektroden (6, 7) ein aus mehreren, parallel zueinander angeordneten, dicht beabstandeten Elektroden bestehendes System (21) bilden, das von der in die Elektrolyseeinrichtung (8) eingeleiteten Kühlschmierstoff-Emulsion entlang der längsten geometrischen Ausdehnung der Elektroden durchströmt wird.

8. Vorrichtung nach einem der Ansprüche 5 bis 7, **dadurch gekennzeichnet**, daß eine elektrische Schaltungsanordnung vorgesehen ist, die den Stromfluß zwischen den Elektroden (6, 7) mißt und auf einen annähernd konstanten Wert durch eine Nachführung der an den Elektroden (6, 7) angelegten elektrischen Spannung ausregelt.

9. Vorrichtung nach einem der Ansprüche 5 bis 8, **dadurch gekennzeichnet**, daß die Schaltungsanordnung die Polarität der an den Elektroden (6, 7) anliegenden Spannung gelegentlich umpolt.

10. Vorrichtung nach einem der Ansprüche 5 bis 9, **dadurch gekennzeichnet**, daß die Elektrolyseeinrichtung (8) und der Phasentrenner (9) in einer mobilen Einheit zusammengefaßt sind, die im Bypassbetrieb an die Bearbeitungsmaschine (1) anschließbar ist.
